# EUROPEAN PATENT SPECIFICATION

(11) **EP 2 471 898 B1**
(45) Date of publication and mention of the grant of the patent: **08.11.2017**
(21) Application number: 10811877.9
(22) Date of filing: 25.08.2010
(51) Int. Cl.: C11D 3/37, C11D 11/00, B29C 45/24, B29C 33/72, C08K 5/42, C08L 23/08, C08L 23/10, C08L 23/12, C08L 33/18, C08L 35/06

(54) **THERMOPLASTIC RESIN COMPOSITION FOR CLEANING**
THERMOPLASTISCHE HARZZUSAMMENSETZUNG ZUM REINIGEN
COMPOSITION DE RÉSINE THERMOPLASTIQUE POUR LE NETTOYAGE

(30) Priority: 26.08.2009 JP 2009195681
(43) Date of publication of application: 04.07.2012
(73) Proprietor: Daicel Polymer Ltd., Tokyo 108-8231 (JP)
(72) Inventor: WAKITA Naoki, Himeji-shi Hyogo 671-1123 (JP)
(74) Representative: Grünecker Patent- und Rechtsanwälte PartG mbB
(86) International application number: PCT/JP2010/064325
(87) International publication number: WO 2011/024828

(56) References cited:
- EP-A2- 0 346 956
- WO-A1-2010/044254
- JP-A- 4 246 443
- JP-A- 9 277 273
- JP-A- 2000 119 458
- JP-A- 2001 071 333
- JP-A- 2001 138 339
- JP-A- 2005 219 398
- JP-A- 2007 021 765
- US-B1- 6 551 411
- DATABASE WPI Week 199143 Thomson Scientific, London, GB; AN 1991-313489 XP002751370, & JP H03 207734 A (CHISSO CORP) 11 September 1991 (1991-09-11)

## Description

### Technical field

The present invention relates to a thermoplastic resin composition for cleaning, which is used for cleaning the inside of a thermoplastic resin molding machine such as an extruder or an injection molding machine.

### Background Arts

JP-A 2009-107160 discloses a cleaning composition for molding machine which contains a thermoplastic resin, a second thermoplastic resin which is not compatible with the thermoplastic resin, and a fluorinated polymer, and JP-A 2005-219398 discloses a cleaning agent for molding machine which contains a styrene-based resin and a propylene-based resin. Both of them show significant phase separation of the two resins and do not give enough function as a cleaning agent.

JPH 05-42547 discloses a cleaning agent for molding machine in which a graft polymer composed of an olefin-based polymer and a styrene-based polymer is mixed with a styrene-based thermoplastic resin, and JPH 08-155969 discloses a cleaning agent for molding machine in which a styrene-acrylonitrile-based resin, a polyethylene-based ultra high polymer, and a graft polymer composed of an olef in-based polymer and a styrene-based polymer are mixed. In these publications there is described an effect in which replacement is easy when a resin to be molded after using the cleaning agent is an olefin-based resin. However, replacement property to polypropylene resin and cleaning ability itself are not sufficiently satisfied.

In JPH 03-207734 there is disclosed a resin composition for cleaning where a polyolefin-based resin, a polymethyl methacrylate, a neutral salt of an organic sulfonic acid, a basic magnesium carbonate, magnesium hydroxide, aluminum hydroxide, zinc carbonate or a mixture of two or more of these are mixed, but cleaning ability thereof is insufficient.

JPH 10-279816 and JP-A 11-106667 disclose a thermoplastic resin composition for cleaning which contains the particular methyl methacrylate-styrene copolymer and the particular surfactant in a thermoplastic resin. JPH 04-246443 discloses a resin composition for cleaning in which a mixture of a polyolefin-based resin, an acrylate-based copolymer, a neutral salt of an organic sulfonic acid, magnesium carbonate, magnesium hydroxide, and the like is mixed. All of these compositions do not have sufficient cleaning ability.

In JPH 07-329113 there is disclosed a resin composition for cleaning a molding machine which contains an olefin-based resin modified with an unsaturated group-containing carboxylic acid derivative, a polyalkylene oxide surfactant or polyalkylene glycol surfactant, and a metal salt of a fatty acid in an olefin-based thermoplastic resin, but cleaning ability thereof is not sufficient.

### Summary of Invention

The problem to be solved by the present invention is to provide a thermoplastic resin composition for cleaning, which has good cleaning ability when used for cleaning the inside of a thermoplastic resin molding machine such as an extruder or an injection molding machine, and is easily replaced by polypropylene when polypropylene is subsequently molded after cleaning.

According to the present invention, there can be provided, as the means to solve the problem, a thermoplastic resin composition for cleaning, containing:
(A) 100 parts by mass of polypropylene resin,
(B) 3 to 40 parts by mass of a thermoplastic resin which is not compatible with the polypropylene resin of the component (A) selected from an acrylnitrile-styrene (AS) resin, a methylmethacrylate-styrene (MS) resin, a copolymer of methylmethacrylate-maleic anhydride-Styrene, and polymethylmethacrylate (PMMA),
(C) 0.5 to 50 parts by mass of a thermoplastic resin for making the polypropylene resin of the component (A) compatible with the thermoplastic resin of the component (B), which is a graft copolymer having a polypropylene (PP) resin, a low density polyethylene (LDPE) resin or an ethylene ethylacrylate (EEA) resin as a main chain to which a polymer or a copolymer including an As resin or a (meth)acrylic resin is grafted, and
(D) 0.5 to 15 parts by mass of a surfactant.

According to the thermoplastic resin composition for cleaning of the present invention, cleaning ability is excellent when used for cleaning the inside of a thermoplastic resin molding machine such as an extruder or an injection molding machine, and replacement with polypropylene becomes easier when polypropylene is subsequently molded after cleaning.

### Detailed Description of the Invention

### <Component (A) >

The polypropylene resin of the component (A) may be a homopolymer or a block copolymer. Preferable block copolymer is a block copolymer of propylene and ethylene.

The polypropylene resin of the component (A) can be a mixture of homopolymer and block copolymer of polypropylene, and a mass ratio of the homopolymer to the block copolymer is preferably 1/9 to 9/1, more preferably 1/9 to 4/6.

### <component (B)>

The component (B) is the thermoplastic resin which is not compatible with the polypropylene resin of the component (A).

The component (B) is a component which enhances cleaning ability.

The resins include one or more selected from an AS resin, an MS resin, a copolymer of methyl metacrylate-maleic acid anhydride-styrene, and a PMMA resin.

The content rate of the thermoplastic resin of the component (B) is, relative to 100 parts by mass of the component (A), 3 to 40 parts by mass, and more preferably 5 to 30 parts by mass.

### <Component (C)>

The thermoplastic resin of the component (C) is a component for making the polypropylene resin of the component (A) compatible with the thermoplastic resin of the component (B). The component (C) itself has a cleaning effect.

The graft copolymer is a graft copolymer which has an olefin-based resin as a main chain and in which a polymer or a copolymer including at least one of a (meth) acrylic acid ester and styrene is grafted. In such a case, the olefin-based resin as a main chain is a PP resin, an LDPE resin, and an EEA resin, and the grafted polymer or copolymer is an AS resin and a (meth) acrylic resin.

The content rate of the thermoplastic resin of the component (C) is, relative to 100 parts by mass of the component (A), 0.5 to 50 parts by mass, preferably 2 to 30 parts by mass, and more preferably 3 to 20 parts by mass.

### <Component (D) >

Examples of the surfactant of the component (D) can include one or more selected from a metal salt of an alkane sulfonic acid, a metal salt of an α-olefin sulfonic acid, and a metal salt of an alkyl benzene sulfonic acid. Specifically there can be used those described in Paragraphs 0052 to 0058 of JP-A 2006-257297.

The content rate of the surfactant of the component (D) is, relative to 100 parts by mass of the component (A), 0.5 to 15 parts by mass, preferably 1 to 10 parts by mass, and more preferably 2 to 5 parts by mass.

### <Component (E)>

The polyethylene resin of the component (E) is a component which enhances cleaning ability. It is possible to enhance cleaning ability more by combining the polyethylene resin of the component (E) with the copolymer of propylene and ethylene as the polypropylene resin of the component (A).

The content rate of the polyethylene resin of the component (E) is, relative to 100 parts by mass of the component (A), 1 to 30 parts by mass, preferably 3 to 25 parts by mass, and more preferably 5 to 20 parts by mass.

### <Component (F) and Component (G)>

The ethylene-acrylic-based copolymer of the component (F) and the unsaturated carboxylic acid modified polyolefin resin of the component (G) are components which aid the improvement of cleaning ability by the component (B) and the component (C).

The ethylene-acrylic-based copolymer of the component (F) is a copolymer of ethylene and an alkyl ester of (meth) acrylic acid such as methyl (meth)acrylate or ethyl (meth)acrylate. Here, the (meth) acrylic acid means acrylic acid or methacrylic acid.

The content rate of the ethylene-acrylic-based copolymer of the component (F) is, relative to 100 parts by mass of the component (A), 3 to 30 parts by mass, preferably 5 to 20 parts by mass, and more preferably 5 to 15 parts by mass.

The unsaturated carboxylic acid modified polyolefin resin of the component (G) has a structure in which an unsaturated carboxylic acid such as maleic acid is bonded to polyethylene, polypropylene.

The content rate of the unsaturated carboxylic acidmodified polyolefin resin of the component (G) is, relative to 100 parts by mass of the component (A), 3 to 30 parts by mass, preferably 5 to 20 parts by mass, and more preferably 5 to 15 parts by mass.

### <Other components>

The composition of the present invention can further contain an inorganic filler. Examples of the inorganic filler can include, in addition to well known glass fiber and metal fiber, fillers selected frommolten slag, steel slag or crushed products thereof, artificial mineral fiber described in JP-A 2006-257297, and there can be used fillers in the form of fiber and non-fiber (powder, particles, crushed products).

The composition of the present invention can contain further an alkylene glycol fatty acid ester, an organic phosphorous compound, a polyalcohol, metal soap described in JP-A 2006-257297.

The composition according to the present invention is produced, for example, by previously mixing each of the aforementioned components through the use of a mixer such as Henschel mixer, tumbler blender or kneader, and then, by kneading through the use of an extruder or melt-kneading through the use of heated rolls or Banbury mixer.

The cleaning mechanism of improvement of the cleaning ability by using the composition according to the present invention is not known, and the cleaning ability is considered to be improved, because, relative to the polypropylene resin of the component (A) which does not have any polar group, by adding the resin of the component (B) which is not compatible with the polypropylene resin and has a polar group, and further blending the component (C) which is a compatible agent of the component (A) and the component (B), to thereby be stabilized, the same effect is obtained as the case where a polar group is substantially imparted to the polypropylene resin of the component (A).

(It should be noted that even when the component (B) is not contained, a high cleaning ability can be obtained by combining the respective components (A), (C) and (D).)

Since the composition according to the present invention contains the polypropylene resin of the component (A) as a base component, the composition is easily replaced by a polypropylene resin after cleaning, and is suitable for cleaning the thermoplastic resin molding machine such as an extruder or an injection molding machine which is used for molding of polypropylene.

### Examples

In the following the present invention will be more specifically explained on the basis of Example, but is not limited to these Examples.

### Example and Comparative Example

The following cleaning test was performed by using the compositions (represented by parts by mass) shown in TABLE 1. The results are shown in TABLE 1.

### <Cleaning Test>

An injection molding machine ("MITSUBISHI INJECTION MOLDER 265/100MSII" manufactured by MITSUBISHIHEAVYINDUSTRIES,LTD., cylinder temperature 250 °C) made use of a red colored product of polypropylene resin (Prime Polypro J-2000GP manufactured by Prime Polymer Co., Ltd., MFR 21) as a prior resin, to mold ten flat plates of 10 cm x 10 cm, having a thickness of 2 mm.

Subsequently, by causing each of the compositions of TABLE 1 to flow until the red color disappeared (visually confirmed whether or not the red color turned to white), the cleaning evaluation of the use amount (kg) of the composition was performed. The smaller the use amount (kg) is, the better the cleaning ability is.

Furthermore, after that, by causing 1 kg of an AS resin to flow, it was observed whether or not a red-colored portion was adhered to the AS resin. When a red-colored portion is adhered to the AS resin, even if cleaning ability is apparently good (visually confirmed), the result shows that the cleaning is not sufficient practically.

### <Replacement property>

When any red-colored portion was not observed after causing 1kg of the AS resin to flow in the above cleaning test, the molding machine was again replaced sufficiently with the red colored product of polypropylene resin, and then ten flat plates of 10 cm x 10 cm, having a thickness of 2 mm were molded. After that, each of the compositions of TABLE 1 was caused to flow until the red color disappeared (visually confirmed). Subsequently, a non-colored polypropylene resin (Prime Polypro J-2000GP manufactured by Prime Polymer Co., Ltd., MFR 21) was caused to flow, and the amount (kg) of the polypropylene resin used until the respective compositions previously caused to flow were not present in the polypropylene resin (until determined visually that the color of the molten resin discharged from the molding machine turned to transparent) was evaluated. The smaller the use amount of the polypropylene resin is, the better the replacement property with a subsequent molding polypropylene resin is.

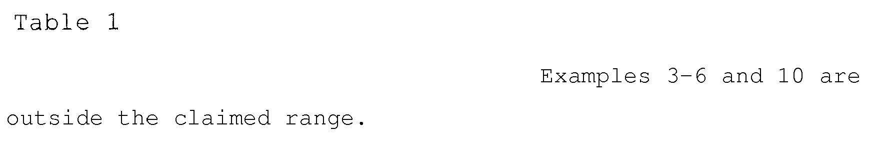

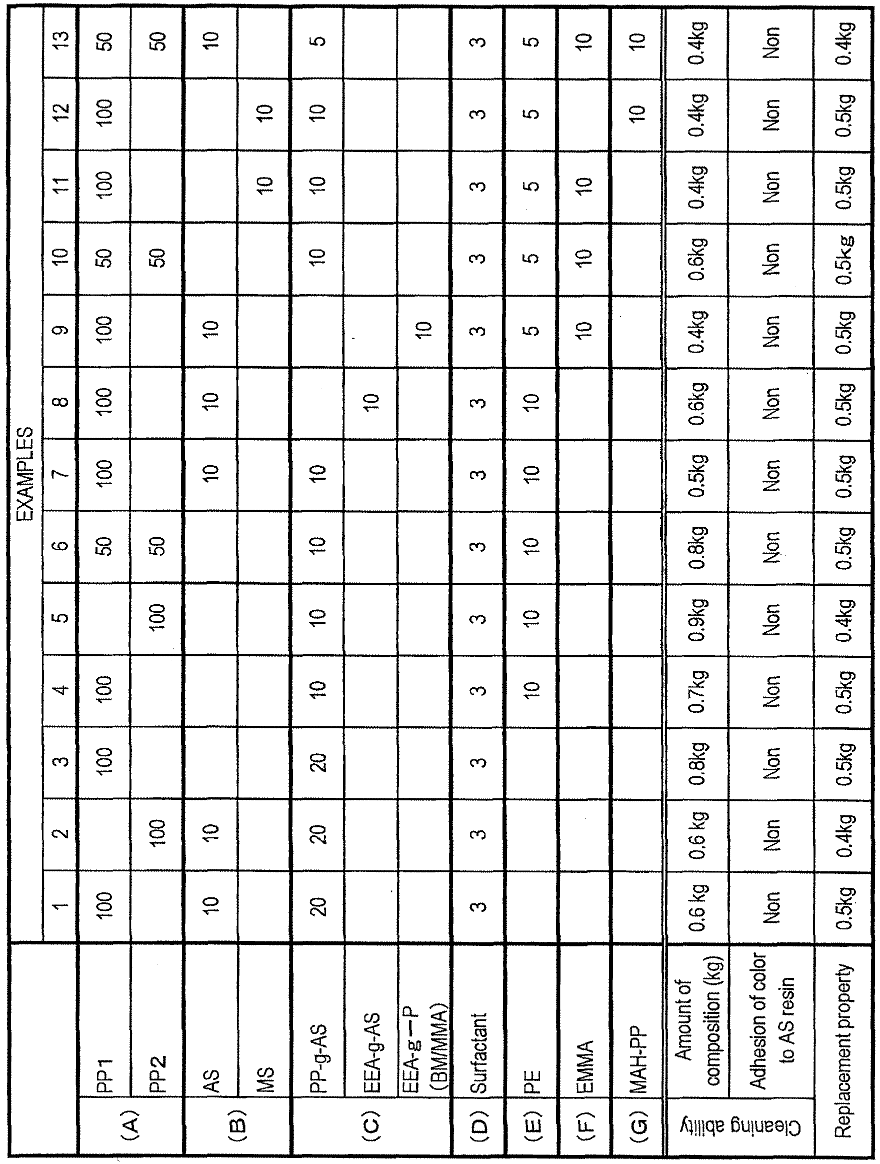

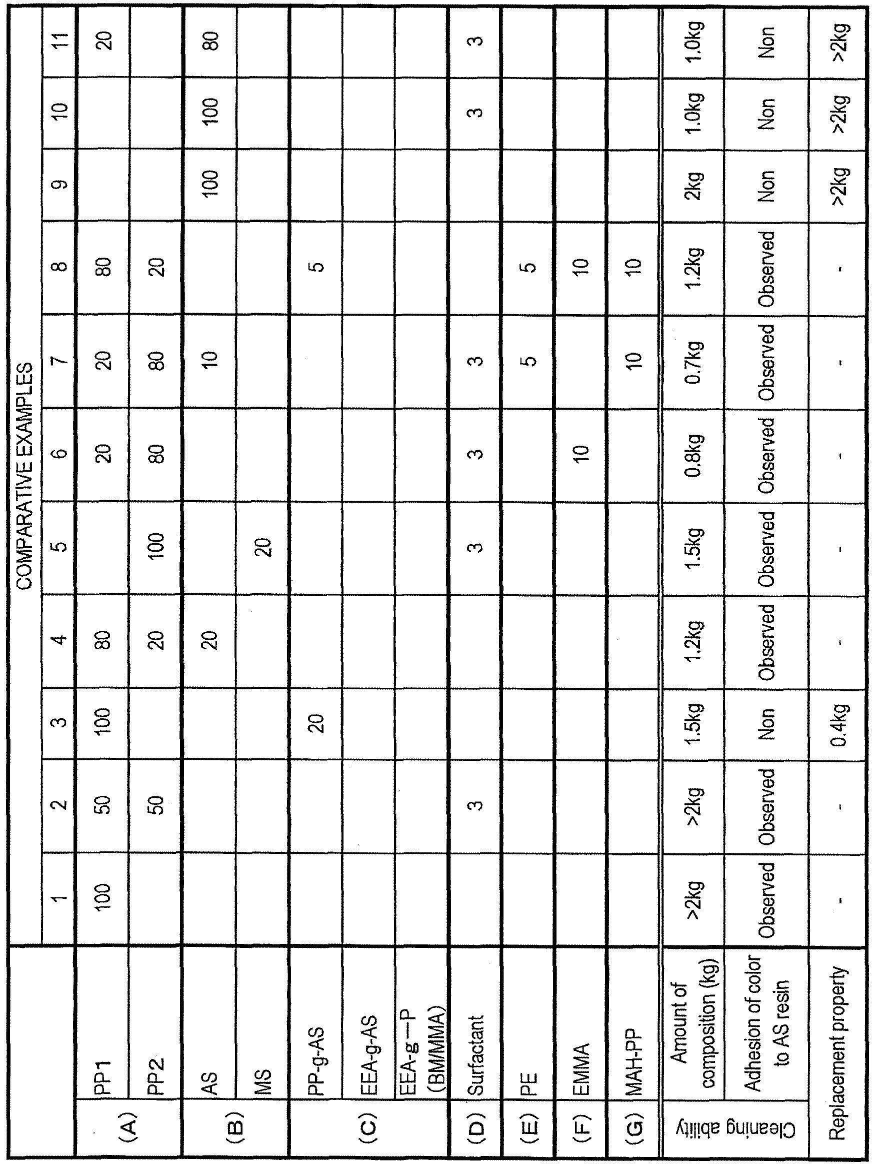

### Component (A)

PP1 (Polypropylene): Prime Polypro E-150GK manufactured by Prime Polymer Co., Ltd. (block copolymer of ethylene-propylene, MFR 0.6)
PP2 (Polypropylene): Prime Polypro E-111G manufactured by Prime Polymer Co., Ltd. (homopolymer, MFR 0.5)

### Component (B)

AS: AS resin, CEVIEN-N 080SF manufactured by Daicel Polymer Co.
MS: MS resin, CEVIEN-MAS MAS30 manufactured by Daicel Polymer Co.

### Component (C)

PP-g-AS: Graft copolymer of PP as a main chain and AS as a side chain, MODIPER A3400 manufactured by NOF Corporation
EEA-g-AS: Graft copolymer of ethylene-ethyl acrylate copolymer as a main chain and AS as a side chain, MODIPER A5400 manufactured by NOF Corporation
EEA-g-P (BA/MMA): Graft copolymer of ethylene-ethyl acrylate copolymer as a main chain and butyl acrylate/methyl methacrylate copolymer as a side chain, MODIPER A5300 manufactured by NOF Corporation

### Component (D)

Surfactant: Sodium dodecylbenzenesulfonate

### Component (E)

PE (polyethylene): HIGHZEX 5000SF manufactured by Prime Polymer CO., Ltd. (high density **PE, MFR** 0.66)

### Component (F)

EMMA (ethylene-methyl methacrylate copolymer): ACRYFT WD201 manufactured by SUMITOMO CHEMICAL

### Component (G)

MAH-PP (maleic acid modified polypropylene): Modic P908 manufactured by MITSUBISHI CHEMICAL

## Claims

1. A thermoplastic resin composition for cleaning comprising:
(A) 100 parts by mass of a polypropylene resin,
(B) 3 to 40 parts by mass of one or more thermoplastic resins selected from an acrylonitrile-styrene (AS) resin, a methylmethacrylate-styrene (MS) resin, a copolymer of methyl methacrylate-maleic acid anhydride-styrene, and a polymethylmethacrylate (PMMA) resin,
(C) 0.5 to 50 parts by mass of a thermoplastic resin which is a graft copolymer having a polypropylene (PP) resin, a low density polyethylene (LDPE) resin or an ethylene ethylacrylate (EEA) resin as a main chain to which a polymer or a copolymer including an AS resin or a (meth)acrylic resin is grafted, and
(D) 0.5 to 15 parts by mass of a surfactant.

2. The thermoplastic resin composition for cleaning according to claim 1, further comprising (E) 1 to 30 parts by mass of a polyethylene resin relative to 100 parts by mass of the polypropylene resin of the component (A).

3. The thermoplastic resin composition for cleaning according to any one of claim 1 or 2, further comprising (F) 3 to 30 parts by mass of an ethylene-acrylic-based copolymer and/or (G) 3 to 30 parts by mass of an unsaturated carboxylic acid modified polyolefin resin relative to 100 parts by mass of the polypropylene resin of the component (A).

4. The thermoplastic resin composition for cleaning according to any one of claims 1 to 3, wherein the polypropylene resin of the component (A) is a mixture of homopolymer and a block copolymer of polypropylene and a weight ratio of the homopolymer to the block copolymer is 1/9 to 9/1.

5. The thermoplastic resin composition for cleaning according to any one of claims 1 to 4, wherein the surfactant of the component (D) is one or more selected from the group consisting of a metal salt of an alkane sulfonic acid, a metal salt of an α-olefin sulfonic acid, and a metal salt of an alkyl benzene sulfonic acid.

## Patentansprüche

1. Thermoplastische Harzzusammensetzung zum Reinigen, umfassend:
(A) 100 Massenteile eines Polypropylenharzes,
(B) 3 bis 40 Massenteile eines oder mehrerer thermoplastischer Harze, ausgewählt aus einem Acrylnitril-Styrol (AS)-Harz, einem Methylmethacrylat-Styrol (MS)-Harz, einem Copolymer aus Methylmethacrylat-Maleinsäureanhydrid-Styrol und einem Polymethylmethacrylat (PMMA)-Harz,
(C) 0,5 bis 50 Massenteile eines thermoplastischen Harzes, das ein Pfropfcopolymer mit einem Polypropylen (PP)-Harz, einem Polyethylen (LDPE)-Harz mit niedriger Dichte oder einem Ethylenethylacrylat (EEA)-Harz als Hauptkette ist, an das ein Polymer oder ein Copolymer, das ein AS-Harz oder ein (Meth)acrylharz enthält, gepfropft ist, und
(D) 0,5 bis 15 Massenteile eines Tensids.

2. Thermoplastische Harzzusammensetzung zum Reinigen nach Anspruch 1, ferner umfassend (E) 1 bis 30 Massenteile eines Polyethylenharzes, bezogen auf 100 Massenteile des Polypropylenharzes der Komponente (A).

3. Thermoplastische Harzzusammensetzung zum Reinigen nach einem der Ansprüche 1 oder 2, ferner umfassend (F) 3 bis 30 Massenteile eines Copolymers auf Ethylen-Acryl-Basis und/oder (G) 3 bis 30 Massenteile eines ungesättigten Carbonsäure-modifizierten Polyolefinharzes, bezogen auf 100 Massenteile des Polypropylenharzes der Komponente (A).

4. Thermoplastische Harzzusammensetzung zum Reinigen nach einem der Ansprüche 1 bis 3, wobei das Polypropylenharz der Komponente (A) ein Gemisch aus Homopolymer und einem Blockcopolymer aus Polypropylen ist und das Gewichtsverhältnis des Homopolymers zu dem Blockcopolymer 1/9 bis 9/1 ist.

5. Thermoplastische Harzzusammensetzung zum Reinigen nach einem der Ansprüche 1 bis 4, wobei das Tensid der Komponente (D) eines oder mehrere ist, ausgewählt aus der Gruppe, bestehend aus einem Metallsalz einer Alkansulfonsäure, einem Metallsalz einer α-Olefinsulfonsäure und einem Metallsalz einer Alkylbenzolsulfonsäure.

## Revendications

1. Composition de résine thermoplastique pour le nettoyage comprenant :
(A) 100 parties en masse d'une résine de polypropylène,
(B) de 3 à 40 parties en masse d'une ou plusieurs résines thermoplastiques choisies parmi une résine d'acrylonitrile et de styrène (AS), une résine de méthacrylate de méthyle et de styrène (MS), un copolymère de méthacrylate de méthyle, d'anhydride d'acide maléique et de styrène et une résine de polyméthacrylate de méthyle (PMMA),
(C) de 0,5 à 50 parties en masse d'une résine thermoplastique qui est un copolymère greffé ayant une résine de polypropylène (PP), une résine de polyéthylène basse densité (LDPE) ou une résine d'éthylène et d'acrylate d'éthyle (EEA) en tant que chaîne principale sur laquelle est greffé un polymère ou un copolymère comprenant une résine d'AS ou une résine (méth)acrylique, et
(D) de 0,5 à 15 parties en masse d'un tensioactif.

2. Composition de résine thermoplastique pour le nettoyage selon la revendication 1, comprenant en outre (E) de 1 à 30 parties en masse d'une résine de polyéthylène par rapport à 100 parties en masse de la résine de polypropylène du composant (A).

3. Composition de résine thermoplastique pour le nettoyage selon l'une quelconque de la revendication 1 ou 2, comprenant en outre (F) de 3 à 30 parties en masse d'un copolymère d'éthylène à base acrylique et/ou (G) de 3 à 30 parties en masse d'une résine de polyoléfine modifiée par un acide carboxylique insaturé par rapport à 100 parties en masse de la résine de polypropylène du composant (A).

4. Composition de résine thermoplastique pour le nettoyage selon l'une quelconque des revendications 1 à 3, dans laquelle la résine de polypropylène du composant (A) est un mélange d'un homopolymère et d'un copolymère séquencé de polypropylène et un rapport massique de l'homopolymère au copolymère séquencé va de 1/9 à 9/1.

5. Composition de résine thermoplastique pour le nettoyage selon l'une quelconque des revendications 1 à 4, dans laquelle le tensioactif du composant (D) est au moins un composé choisi dans le groupe constitué d'un sel métallique d'un acide alcanesulfonique, d'un sel métallique d'un acide α-oléfinesulfonique et d'un sel métallique d'un acide alkylbenzènesulfonique.
